(19) Europäisches Patentamt
European Patent Office
Office européen des brevets

(11) **EP 2 846 454 B1**

(12) **FASCICULE DE BREVET EUROPEEN**

(45) Date de publication et mention
de la délivrance du brevet:
**06.10.2021 Bulletin 2021/40**

(51) Int Cl.:
*H02P 3/18* (2006.01)

(21) Numéro de dépôt: **14181789.0**

(22) Date de dépôt: **21.08.2014**

(54) **Procédé de commande mis en oeuvre dans un variateur de vitesse pour la décélération d'un moteur électrique**

Steuerverfahren in einem Drehzahlregler für die Drehzahlverzögerung eines Elektromotors

Control method implemented in a variable speed drive for decelerating an electric motor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.09.2013 FR 1358669**

(43) Date de publication de la demande:
**11.03.2015 Bulletin 2015/11**

(73) Titulaire: **Schneider Toshiba Inverter Europe SAS
27120 Pacy sur Eure (FR)**

(72) Inventeur: **Devos, Thomas
78955 Carrières sous Poissy (FR)**

(74) Mandataire: **Mouney, Jérôme et al
Schneider Electric Industries SAS
Service Propriété Industrielle
35 rue Joseph Monier - CS30323
92506 Rueil Malmaison Cedex (FR)**

(56) Documents cités:
**EP-A1- 1 304 209    FR-A1- 2 982 096
US-A- 4 667 776**

• **None**

EP 2 846 454 B1

**Description**

**Domaine technique de l'invention**

La présente invention se rapporte à un procédé de commande mis en œuvre dans un variateur de vitesse et à un variateur de vitesse apte à mettre en œuvre ledit procédé de commande.

**Etat de la technique**

Un variateur de vitesse est destiné à commander un moteur électrique. Il comporte principalement un étage redresseur en entrée, un étage onduleur en sortie et un bus continu d'alimentation reliant l'étage redresseur à l'étage onduleur. L'étage redresseur est généralement composé d'un pont de diodes et l'étage onduleur comporte plusieurs bras de commutation, commandés chacun par une unité de commande, de manière à fournir une tension variable au moteur électrique. Le variateur de vitesse comporte également un condensateur de bus connecté à une première ligne d'alimentation et à une deuxième ligne d'alimentation du bus continu d'alimentation.

Lorsque le moteur électrique décélère, l'énergie mécanique issue de la décélération est réinjectée vers le variateur de vitesse sous forme d'énergie électrique. Un variateur de vitesse dont l'étage redresseur est un pont de diodes ne permet pas de renvoyer cette énergie électrique sur le réseau de distribution électrique. Pour dissiper cette énergie électrique et protéger l'étage onduleur, deux solutions connues sont employées :

- La première solution consiste à employer une résistance de freinage permettant de dissiper l'énergie électrique renvoyée par le moteur électrique lors de sa décélération. Cette solution nécessite que le variateur de vitesse soit équipé de transistors de freinage.
- La deuxième solution consiste à modifier la trajectoire de décélération du moteur électrique afin de limiter l'énergie électrique renvoyée vers le variateur de vitesse.

La deuxième solution est avantageuse car elle ne nécessite pas un dispositif dédié au freinage qui peut s'avérer coûteux. Cependant, le temps de décélération du moteur électrique peut s'avérer long car il est simplement lié aux pertes mécaniques et électriques se produisant dans le moteur électrique.

L'objectif de l'invention est de proposer une solution permettant de diminuer le temps de décélération du moteur électrique, sans employer un dispositif de freinage dédié comme dans l'état de la technique. Le document FR 2 982 096 décrit un état de la technique correspondant aux préambules des revendications indépendantes

**Exposé de l'invention**

Cet objectif est atteint par un procédé de commande mis en œuvre dans un variateur de vitesse connecté à un moteur électrique, ledit variateur de vitesse comprenant :

- plusieurs phases d'entrée aptes à se connecter à un réseau de distribution électrique,
- un étage redresseur connecté aux phases d'entrée et agencé pour redresser une tension fournie par le réseau de distribution électrique,
- un bus continu d'alimentation connecté à l'étage redresseur, le bus continu d'alimentation comportant une première ligne d'alimentation et une deuxième ligne d'alimentation, définissant entre elles une tension du bus continu d'alimentation,
- un condensateur de bus connecté à la première ligne d'alimentation et à la deuxième ligne d'alimentation et agencé pour maintenir la tension du bus continu d'alimentation à une valeur constante,
- un étage onduleur connecté en aval du bus continu d'alimentation et comprenant plusieurs bras de commutation,
- plusieurs phases de sortie agencées pour relier l'étage onduleur au moteur électrique,
- une unité de commande de l'étage onduleur, agencée pour commander les bras de commutation de l'étage onduleur en vue de délivrer une tension variable au moteur électrique à partir d'une loi de commande,
- un dispositif de précharge connecté en série avec le condensateur de bus et comprenant une résistance de précharge et un interrupteur connecté en parallèle de ladite résistance de précharge,

le procédé consistant à commander l'étage onduleur de manière à contrôler le courant circulant dans la résistance de précharge lors d'une décélération du moteur, ledit courant étant contrôlé en tenant compte de la tension du bus continu d'alimentation et d'une valeur de référence optimale.

Selon une particularité de l'invention, la valeur de référence optimale est représentative d'un compromis entre les pertes subies dans la résistance de précharge et l'amplitude des oscillations de la tension du bus continu d'alimentation.

Selon une autre particularité, le procédé comporte une étape de détermination d'un couple de limitation tenant compte d'une différence entre la tension du bus continu d'alimentation et la valeur de référence optimale, ledit couple de limitation étant appliqué à une référence de couple dans la loi de commande.

L'invention concerne également un variateur de vitesse comprenant :

-   plusieurs phases d'entrée aptes à se connecter à un réseau de distribution électrique,
-   un étage redresseur connecté aux phases d'entrée et agencé pour redresser une tension fournie par le réseau de distribution électrique,
-   un bus continu d'alimentation connecté à l'étage redresseur, le bus continu d'alimentation comportant une première ligne d'alimentation et une deuxième ligne d'alimentation, définissant entre elles une tension du bus continu d'alimentation,
-   un condensateur de bus connecté à la première ligne d'alimentation et à la deuxième ligne d'alimentation et agencé pour maintenir la tension du bus continu d'alimentation à une valeur constante,
-   un étage onduleur connecté en aval du bus continu d'alimentation et comprenant plusieurs bras de commutation,
-   plusieurs phases de sortie agencées pour relier l'étage onduleur à un moteur électrique,
-   une unité de commande de l'étage onduleur, agencée pour commander les bras de commutation de l'étage onduleur en vue de délivrer une tension variable au moteur électrique,
-   un dispositif de précharge connecté en série avec le condensateur de bus et comprenant une résistance de précharge et un interrupteur connecté en parallèle de ladite résistance de précharge,
-   l'unité de commande comportant un module de décélération agencé pour commander l'étage onduleur de manière à contrôler le courant circulant dans la résistance de précharge lors d'une décélération du moteur, ledit courant étant contrôlé en tenant compte de la tension du bus continu d'alimentation et d'une valeur de référence.

Selon une particularité, la valeur de référence optimale est représentative d'un compromis entre les pertes subies dans la résistance de précharge et l'amplitude des oscillations de la tension du bus continu d'alimentation.

Selon une autre particularité, le variateur de vitesse comporte un module de détermination d'un couple de limitation tenant compte d'une différence entre la tension du bus continu d'alimentation et la valeur de référence optimale.

**Brève description des figures**

D'autres caractéristiques et avantages vont apparaître dans la description détaillée qui suit faite en regard des dessins annexés dans lesquels :

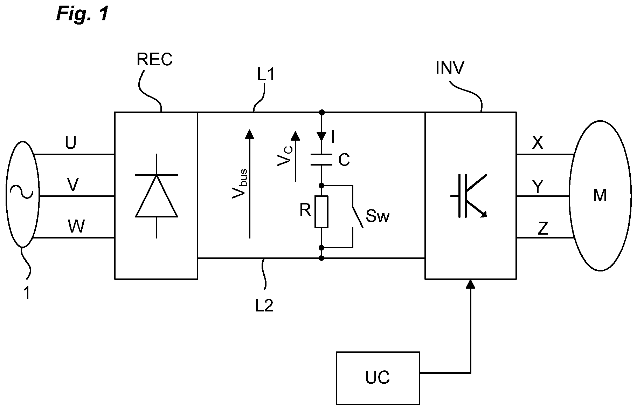

-   la figure 1 représente un variateur de vitesse conforme à l'invention,

-   la figure 2 représente un synoptique de la loi de commande mise en œuvre dans le variateur de vitesse de l'invention,

-   les figures 3A à 3C illustrent le fonctionnement et l'intérêt de l'invention.

**Description détaillée d'au moins un mode de réalisation**

L'invention s'applique à un variateur de vitesse destiné à commander un moteur électrique.

De manière connue, un variateur de vitesse comporte :

-   plusieurs phases d'entrée, par exemple trois phases d'entrée U, V, W destinées à se connecter à un réseau de distribution électrique 1,

-   un étage redresseur REC connecté aux trois phases d'entrée U, V, W et composé d'un pont de diodes, ledit pont de diodes étant destiné à redresser une tension alternative fournie par le réseau de distribution électrique 1,

-   un étage onduleur INV comportant plusieurs bras de commutation, par exemple trois bras de commutation,

-   un bus continu d'alimentation reliant l'étage redresseur à l'étage onduleur et comportant une première ligne d'alimentation L1 à potentiel électrique positif et une deuxième ligne d'alimentation L2 à potentiel électrique négatif, entre lesquelles est appliquée la tension redressée, dite tension $V_{bus}$ du bus continu d'alimentation,

-   un condensateur de bus C connecté à la première ligne d'alimentation L1 et à la deuxième ligne d'alimentation L2 et destiné à maintenir la tension $V_{bus}$ du bus continu d'alimentation à une valeur constante,

- plusieurs phases de sortie, par exemple trois phases de sortie X, Y, Z, reliant chacune le point milieu d'un bras de commutation de l'étage onduleur INV au moteur électrique M,

- une unité de commande UC agencée pour commander les bras de commutation de l'étage onduleur INV en vue d'appliquer une tension variable au moteur électrique M. L'unité de commande UC met en œuvre une loi de commande pour déterminer les tensions à appliquer sur les phases de sortie.

Par ailleurs, il est connu de doter les variateurs de vitesse d'un dispositif de précharge composé d'une résistance de précharge R et d'un interrupteur Sw connecté en parallèle de la résistance R. Lors du démarrage du variateur de vitesse, la résistance de précharge R permet de réduire le courant d'appel sur le bus continu d'alimentation. En fonctionnement normal, la résistance de précharge R est court-circuitée par l'interrupteur Sw. Dans le cadre de l'invention, le dispositif de précharge est connecté en série avec le condensateur de bus C.

Le principe de l'invention consiste à employer la résistance de précharge R pour dissiper de l'énergie électrique générée lors de la décélération du moteur électrique M, ce qui permet de raccourcir le temps de décélération du moteur électrique M. L'emploi de la résistance de précharge R dans le processus de décélération permet de maximiser les pertes à l'intérieur du variateur de vitesse, ces pertes venant s'ajouter à celles générées par effet mécanique et électrique dans le moteur électrique M. Lors de la décélération du moteur électrique M, la résistance de précharge R connectée en série avec le condensateur de bus C n'est pas court-cicuitée par l'interrupteur Sw et le courant électrique I renvoyé lors du freinage traverse la résistance de précharge R, générant des pertes par effet joule.

Néanmoins, la résistance de précharge R ne présente pas un dimensionnement équivalent à celui d'une résistance de freinage dont la fonction est entièrement dédiée à dissiper l'énergie électrique générée lors de la décélération du moteur électrique. Il convient donc de contrôler le courant électrique I qui circule dans la résistance de précharge afin d'éviter tout dommage de la résistance ou des transistors de l'étage onduleur (la résistance influençant également la tension aux bornes des transistors). Afin de contrôler le courant I circulant à travers la résistance de précharge R lors de la décélération du moteur électrique M, le procédé de l'invention, mis en œuvre dans un module de décélération spécifique, consiste donc à appliquer une trajectoire de couple au moteur électrique M, cette trajectoire de couple étant déterminée par l'unité de commande UC de telle sorte que le courant I sur le bus continu d'alimentation varie. Selon l'invention, lors de la décélération du moteur électrique M, le courant moyen renvoyé sur le bus continu d'alimentation est nul de sorte que la tension Vbus du bus continu d'alimentation reste en moyenne constante, mais le courant I est commandé de manière à osciller pour pouvoir être dissipé dans la résistance de précharge R.

Selon l'invention, la trajectoire de couple T* appliquée au moteur électrique M lors de sa décélération est déterminée par l'unité de commande UC à partir de la tension $V_{bus}$ du bus continu d'alimentation, déterminée par mesure ou par estimation. La tension $V_{bus}$ du bus continu d'alimentation est comparée à une valeur de référence optimale $V_{bus\_ref}$ permettant de maximiser les pertes dans le variateur de vitesse tout en limitant l'amplitude des oscillations de tension sur le bus continu d'alimentation, des oscillations d'amplitude trop importante risquant d'endommager les composants du variateur de vitesse et d'affecter la performance du contrôle du moteur.

La valeur de référence $V_{bus\_ref}$ représente donc un compromis à adopter entre les pertes subies par le variateur de vitesse et l'amplitude des oscillations de tension sur le bus continu d'alimentation. Le module de décélération est agencé pour optimiser la décélération du moteur électrique en contrôlant le courant électrique circulant à travers la résistance de précharge.

Ce compromis à adopter s'explique notamment par la démonstration ci-dessous.

Les équations du système sont les suivantes :

$$I = C\frac{dV_C}{dt}$$

$$V_C = V_{bus} - RI$$

$$C\frac{dV_C}{dt}V_C + RI^2 = P$$

$$C\frac{dV_C}{dt}V_C + RC^2\left(\frac{dV_C}{dt}\right)^2 = P$$

Dans lesquelles :

- I représente le courant traversant le condensateur de bus C et la résistance de précharge R lors de la décélération du moteur électrique M,
- C représente la capacité du condensateur de bus,
- $V_c$ représente la tension aux bornes du condensateur de bus,
- $V_{bus}$ représente la tension du bus continu d'alimentation,
- R représente la valeur de la résistance de précharge,
- P représente la puissance,
- t représente le temps.

Une résolution simplifiée consiste à choisir la tension $V_c$ du condensateur de bus égale à une constante à laquelle on ajoute une composante oscillante. On a alors :

$$I = C\frac{dV_C}{dt}$$

$$V_C = V_0 + V_1 \sin(\omega t)$$

Dans lesquelles :

- $V_0$ représente la composante de tension constante,
- $V_1 \sin(\omega t)$ représente la composante de tension oscillante.

On obtient alors les valeurs de I et de $V_{bus}$ :

$$I = C\frac{dV_C}{dt} = CV_1\omega\cos(\omega t)$$

$$V_{bus} = V_C + RI = V_0 + V_1\sin(\omega t) + RCV_1\omega\cos(\omega t)$$

La puissance réinjectée dans le variateur de vitesse par le moteur électrique M en décélération s'exprime alors de la manière suivante :

$$P = IV_{bus} = (CV_1\omega\cos(\omega t))(V_0 + V_1\sin(\omega t) + RCV_1\omega\cos(\omega t))$$

$$P = CV_0V_1\omega\cos(\omega t) + CV_1^2\omega\cos(\omega t)\sin(\omega t) + RC^2V_1^2\omega^2(\cos(\omega t))^2$$

Connaissant les équations trigonométriques suivantes :

$$\cos(\omega t)\sin(\omega t) = \frac{1}{2}\sin(2\omega t)$$

$$(\cos(\omega t))^2 = \frac{1}{2}(1 + \cos(2\omega t))$$

On obtient alors :

$$P = \frac{RC^2 V_1^2 \omega^2}{2} + CV_0 V_1 \omega \cos(\omega t) + \frac{1}{2} CV_1^2 \omega \sin(2\omega t) + \frac{RC^2 V_1^2 \omega^2}{2} \cos(2\omega t)$$

Dans cette expression de la puissance réinjectée, le terme $\dfrac{RC^2 V_1^2 \omega^2}{2}$ correspond au terme de dissipation d'énergie électrique. Les autres termes sont en effet des oscillants et leur valeur moyenne est nulle.

Comme décrit ci-dessus, la tension $V_{bus}$ du bus continu d'alimentation s'exprime par la relation suivante :

$$V_{bus} = V_c + RI = V_0 + V_1 \sin(\omega t) + RCV_1 \omega \cos(\omega t)$$

La composante oscillante de cette expression vaut donc :

$$V_{bus\_osc} = \sqrt{V_1^2 \left(1 + (RC\omega)^2\right)}$$

On a donc les deux expressions suivantes :

$$Pertes = \frac{RC^2 V_1^2 \omega^2}{2}$$

$$V_{bus\_osc} = V_1 \sqrt{\left(1 + (RC\omega)^2\right)}$$

En examinant ces deux expressions, on voit que les paramètres R, C, V1 et $\omega$ agissent à la fois sur les pertes et sur l'amplitude des oscillations de la tension du bus continu d'alimentation. On en conclut qu'il est nécessaire de faire un compromis dans les valeurs de R, C, V1 et $\omega$ pour à la fois augmenter les pertes, sans augmenter de manière trop importante l'amplitude des oscillations de la tension sur le bus continu d'alimentation.

Les valeurs de la résistance de précharge R et du condensateur de bus C sont choisies de manière définitive dans le variateur de vitesse. Le niveau des pertes générées dans la résistance de précharge peut donc être défini par le choix de la valeur de référence optimale $V_{bus\_ref}$ évoquée ci-dessus.

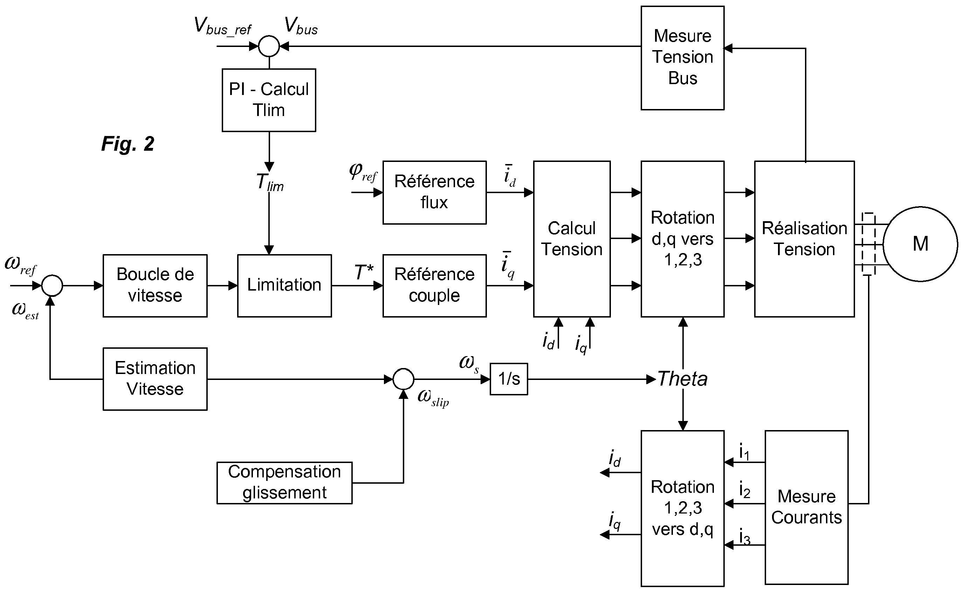

La figure 2 représente la loi de commande mise en œuvre dans le variateur de vitesse. Cette loi de commande comporte une partie à fonctionnement classique et une partie faisant l'objet de l'invention. Dans le procédé de l'invention, la valeur de référence optimale $V_{bus\_ref}$ est comparée à la tension $V_{bus}$ du bus continu d'alimentation. La différence calculée est injectée dans un régulateur à action proportionnelle-intégrale PI (d'autres choix de régulateur sont également possibles). Le régulateur à action proportionnelle-intégrale PI détermine un couple de limitation Tlim. Le couple de limitation Tlim est appliqué à la référence de couple de manière à la corriger. Lors de la décélération du moteur électrique M, la tension $V_{bus}$ du bus continu d'alimentation oscille de manière suffisante pour générer des pertes dans la résistance de précharge, mais sans dépasser une certaine limite pour éviter d'endommager le variateur de vitesse. Par ailleurs, de manière connue, la loi de commande permet de déterminer les tensions à appliquer sur les phases de sortie X, Y, Z en tenant compte d'une référence de vitesse $\omega_{ref}$ et d'une référence de flux $\varphi_{ref}$ appliquées en entrée. La référence de couple T* est issue de la référence de vitesse $\omega_{ref}$. Les autres caractéristiques de la loi de commande étant connues, celles-ci ne sont pas décrites dans la présente demande. Certaines références ($i_d$, $i_q$,...) de la figure 2, largement connues, ne sont donc pas explicitées dans la présente demande.

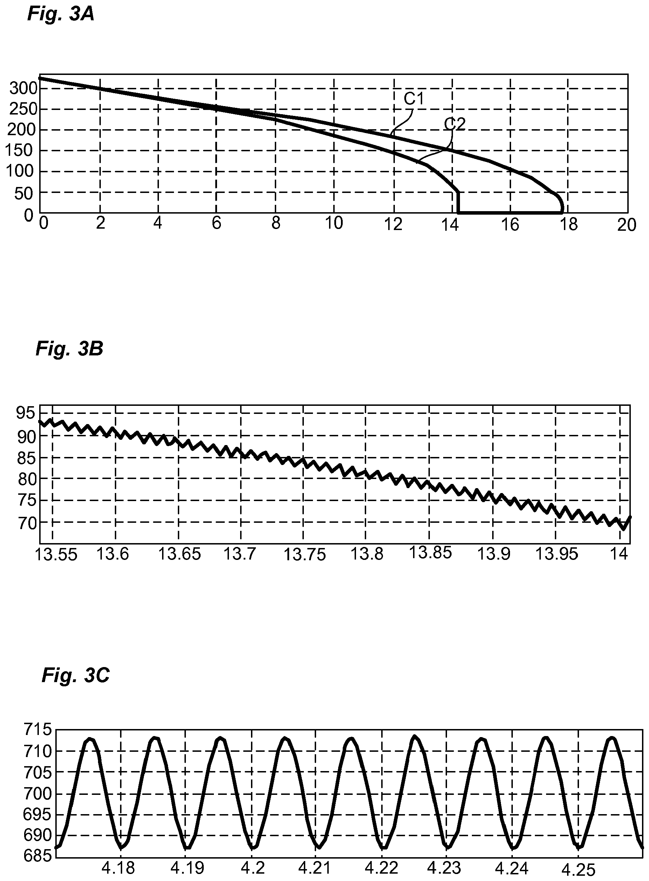

Les figures 3A à 3C illustrent l'intérêt de la solution de l'invention.

Sur la figure 3A, la courbe C1 montre la décélération en vitesse du moteur électrique sans la solution de l'invention, c'est-à-dire sans dissipation dans la résistance de précharge et la courbe C2 montre la décélération en vitesse du moteur électrique avec la solution de l'invention, c'est-à-dire en dissipant une partie de l'énergie électrique générée par le freinage dans la résistance de précharge. On peut voir que le temps de décélération est plus court avec la solution de l'invention.

Sur la figure 3B, on peut voir un zoom sur la vitesse du moteur en décélération. On peut voir que la trajectoire de la vitesse est oscillante, ce qui permet de générer les pertes dans la résistance de précharge R.

Sur la figure 3C, on peut voir les oscillations de la tension $V_{bus}$ du bus continu d'alimentation lors de la décélération du moteur électrique M. Comme évoqué ci-dessus, l'amplitude de ces oscillations doit être limitée pour éviter tout endommagement du variateur de vitesse.

**Revendications**

1. Procédé de commande mis en œuvre dans un variateur de vitesse connecté à un moteur électrique, ledit variateur de vitesse comprenant :

   - plusieurs phases d'entrée (U, V, W) aptes à se connecter à un réseau de distribution électrique (1),
   - un étage redresseur (REC) connecté aux phases d'entrée (U, V, W) et agencé pour redresser une tension fournie par le réseau de distribution électrique,
   - un bus continu d'alimentation connecté à l'étage redresseur (REC), le bus continu d'alimentation comportant une première ligne d'alimentation (L1) et une deuxième ligne d'alimentation (L2), définissant entre elles une tension ($V_{bus}$) du bus continu d'alimentation,
   - un condensateur de bus (C) connecté à la première ligne d'alimentation et à la deuxième ligne d'alimentation et agencé pour maintenir la tension du bus continu d'alimentation à une valeur constante,
   - un étage onduleur (INV) connecté en aval du bus continu d'alimentation et comprenant plusieurs bras de commutation,
   - plusieurs phases de sortie agencées pour relier l'étage onduleur au moteur électrique,
   - une unité de commande (UC) de l'étage onduleur, agencée pour commander les bras de commutation de l'étage onduleur en vue de délivrer une tension variable au moteur électrique à partir d'une loi de commande,
   - un dispositif de précharge connecté en série avec le condensateur de bus (C) et comprenant une résistance de précharge (R) et un interrupteur (Sw) connecté en parallèle de ladite résistance de précharge (R),

   **caractérisé en ce que** le procédé consiste à commander l'étage onduleur (INV) de manière à contrôler le courant (I) circulant dans la résistance de précharge (R) lors d'une décélération du moteur, ledit courant (I) étant contrôlé en tenant compte de la tension ($V_{bus}$) du bus continu d'alimentation et d'une valeur de référence optimale ($V_{bus\_ref}$).

2. Procédé de commande selon la revendication 1, **caractérisé en ce que** la valeur de référence optimale est représentative d'un compromis entre les pertes subies dans la résistance de précharge et l'amplitude des oscillations de la tension du bus continu d'alimentation.

3. Procédé de commande selon la revendication 1 ou 2, **caractérisé en ce qu'**il comporte une étape de détermination d'un couple de limitation tenant compte d'une différence entre la tension du bus continu d'alimentation et la valeur de référence optimale, ledit couple de limitation étant appliqué à une référence de couple dans la loi de commande.

4. Variateur de vitesse comprenant :

   - plusieurs phases d'entrée (U, V, W) aptes à se connecter à un réseau de distribution électrique (1),
   - un étage redresseur (REC) connecté aux phases d'entrée (U, V, W) et agencé pour redresser une tension fournie par le réseau de distribution électrique (1),
   - un bus continu d'alimentation connecté à l'étage redresseur (REC), le bus continu d'alimentation comportant une première ligne d'alimentation (L1) et une deuxième ligne d'alimentation (L2), définissant entre elles une tension ($V_{bus}$) du bus continu d'alimentation,
   - un condensateur de bus (C) connecté à la première ligne d'alimentation et à la deuxième ligne d'alimentation et agencé pour maintenir la tension du bus continu d'alimentation à une valeur constante,
   - un étage onduleur (INV) connecté en aval du bus continu d'alimentation et comprenant plusieurs bras de commutation,
   - plusieurs phases de sortie (X, Y, Z) agencées pour relier l'étage onduleur à un moteur électrique,
   - une unité de commande de l'étage onduleur, agencée pour commander les bras de commutation de l'étage onduleur en vue de délivrer une tension variable au moteur électrique,
   - un dispositif de précharge connecté en série avec le condensateur de bus et comprenant une résistance de précharge (R) et un interrupteur (Sw) connecté en parallèle de ladite résistance de précharge,

**caractérisé en ce que** :

- l'unité de commande (UC) comporte un module de décélération agencé pour commander l'étage onduleur de manière à contrôler le courant circulant dans la résistance de précharge lors d'une décélération du moteur, ledit courant étant contrôlé en tenant compte de la tension du bus continu d'alimentation et d'une valeur de référence.

5. Variateur de vitesse selon la revendication 4, **caractérisé en ce que** la valeur de référence optimale est représentative d'un compromis entre les pertes subies dans la résistance de précharge et l'amplitude des oscillations de la tension du bus continu d'alimentation.

6. Variateur de vitesse selon la revendication 4 ou 5, **caractérisé en ce qu'**il comporte un module de détermination d'un couple de limitation tenant compte d'une différence entre la tension du bus continu d'alimentation et la valeur de référence optimale.

**Patentansprüche**

1. Steuerverfahren, das in einem Drehzahlregler, der mit einem Elektromotor verbunden ist, umgesetzt wird, wobei der Drehzahlregler Folgendes beinhaltet:

- mehrere Eingangsphasen (U, V, W), die dazu fähig sind, sich mit einem elektrischen Versorgungsnetz (1) zu verbinden,
- eine Gleichrichterstufe (REC), die mit den Eingangsphasen (U, V, W) verbunden ist und dazu angeordnet ist, eine durch das elektrische Versorgungsnetz bereitgestellte Spannung gleichzurichten,
- einen Gleichstromversorgungsbus, der mit der Gleichrichterstufe (REC) verbunden ist, wobei der Gleichstromversorgungsbus eine erste Versorgungsleitung (L1) und eine zweite Versorgungsleitung (L2) umfasst, die zwischen sich eine Spannung ($V_{bus}$) des Gleichstromversorgungsbusses definieren,
- einen Buskondensator (C), der mit der ersten Versorgungsleitung und mit der zweiten Versorgungsleitung verbunden ist und dazu angeordnet ist, die Spannung des Gleichstromversorgungsbusses auf einem konstanten Wert zu halten,
- eine Wechselrichterstufe (INV), die stromabwärts des Gleichstromversorgungsbusses verbunden ist und mehrere Schaltarme beinhaltet,
- mehrere Ausgangsphasen, die dazu angeordnet sind, die Wechselrichterstufe an den Elektromotor anzuschließen,
- eine Steuereinheit (UC) der Wechselrichterstufe, die dazu angeordnet ist, die Schaltarme der Wechselrichterstufe zu steuern, um gemäß einem Steuergesetz eine variable Spannung an den Elektromotor abzugeben,
- eine Vorladevorrichtung, die mit dem Buskondensator (C) in Reihe geschaltet ist und einen Vorladewiderstand (R) und einen Schalter (Sw), der zu dem Vorladewiderstand (R) parallel geschaltet ist, beinhaltet,

**dadurch gekennzeichnet, dass** das Verfahren darin besteht, die Wechselrichterstufe (INV) zu steuern, um den in dem Vorladewiderstand (R) fließenden Strom (I) bei einer Verzögerung des Motors zu überwachen, wobei der Strom (I) unter Berücksichtigung der Spannung ($V_{bus}$) des Gleichstromversorgungsbusses und eines optimalen Referenzwerts ($V_{bus\_ref}$) überwacht wird.

2. Steuerverfahren nach Anspruch 1, **dadurch gekennzeichnet, dass** der optimale Referenzwert einen Kompromiss zwischen den in dem Vorladewiderstand erzeugten Verlusten und der Amplitude der Schwingungen der Spannung des Gleichstromversorgungsbusses darstellt.

3. Steuerverfahren nach Anspruch 1 oder 2, **dadurch gekennzeichnet, dass** es einen Schritt des Bestimmens eines Begrenzungsdrehmoments unter Berücksichtigung einer Differenz zwischen der Spannung des Gleichstromversorgungsbusses und dem optimalen Referenzwert umfasst, wobei das Begrenzungsdrehmoment auf eine Drehmomentreferenz in dem Steuergesetz angewendet wird.

4. Drehzahlregler, der Folgendes beinhaltet:

- mehrere Eingangsphasen (U, V, W), die dazu fähig sind, sich mit einem elektrischen Versorgungsnetz (1) zu verbinden,
- eine Gleichrichterstufe (REC), die mit den Eingangsphasen (U, V, W) verbunden ist und dazu angeordnet ist, eine durch das elektrische Versorgungsnetz (1) bereitgestellte Spannung gleichzurichten,

- einen Gleichstromversorgungsbus, der mit der Gleichrichterstufe (REC) verbunden ist, wobei der Gleichstromversorgungsbus eine erste Versorgungsleitung (L1) und eine zweite Versorgungsleitung (L2) umfasst, die zwischen sich eine Spannung ($V_{bus}$) des Gleichstromversorgungsbusses definieren,
- einen Buskondensator (C), der mit der ersten Versorgungsleitung und mit der zweiten Versorgungsleitung verbunden ist und dazu angeordnet ist, die Spannung des Gleichstromversorgungsbusses auf einem konstanten Wert zu halten,
- eine Wechselrichterstufe (INV), die stromabwärts des Gleichstromversorgungsbusses verbunden ist und mehrere Schaltarme beinhaltet,
- mehrere Ausgangsphasen (X, Y, Z), die dazu angeordnet sind, die Wechselrichterstufe an einen Elektromotor anzuschließen,
- eine Steuereinheit der Wechselrichterstufe, die dazu angeordnet ist, die Schaltarme der Wechselrichterstufe zu steuern, um eine variable Spannung an den Elektromotor abzugeben,
- eine Vorladevorrichtung, die mit dem Buskondensator in Reihe geschaltet ist und einen Vorladewiderstand (R) und einen Schalter (Sw), der zu dem Vorladewiderstand parallel geschaltet ist, beinhaltet,

**dadurch gekennzeichnet, dass**:

- die Steuereinheit (UC) ein Verzögerungsmodul umfasst, das dazu angeordnet ist, die Wechselrichterstufe zu steuern, um den in dem Vorladewiderstand fließenden Strom bei einer Verzögerung des Motors zu überwachen, wobei der Strom unter Berücksichtigung der Spannung des Gleichstromversorgungsbusses und eines Referenzwerts überwacht wird.

5. Drehzahlregler nach Anspruch 4, **dadurch gekennzeichnet, dass** der optimale Referenzwert einen Kompromiss zwischen den in dem Vorladewiderstand erzeugten Verlusten und der Amplitude der Schwingungen der Spannung des Gleichstromversorgungsbusses darstellt.

6. Drehzahlregler nach Anspruch 4 oder 5, **dadurch gekennzeichnet, dass** er ein Modul zum Bestimmen eines Begrenzungsdrehmoments unter Berücksichtigung einer Differenz zwischen der Spannung des Gleichstromversorgungsbusses und dem optimalen Referenzwert umfasst.

**Claims**

1. Control method implemented in a variable speed drive connected to an electric motor, said variable speed drive comprising:

   - a plurality of input phases (U, V, W) able to be connected to an electrical distribution network (1),
   - a rectifier stage (REC) connected to the input phases (U, V, W) and designed to rectify a voltage supplied by the electrical distribution network,
   - a DC power supply bus connected to the rectifier stage (REC), the DC power supply bus comprising a first power supply line (L1) and a second power supply line (L2), defining between them a voltage ($V_{bus}$) of the DC power supply bus,
   - a bus capacitor (C) connected to the first power supply line and to the second power supply line and designed to keep the voltage of the DC power supply bus at a constant value,
   - an inverter stage (INV) connected downstream of the DC power supply bus and comprising a plurality of switching arms,
   - a plurality of output phases designed to connect the inverter stage to the electric motor,
   - a control unit (UC) for controlling the inverter stage, designed to control the switching arms of the inverter stage in order to deliver a variable voltage to the electric motor based on a control law,
   - a preload device connected in series with the bus capacitor (C) and comprising a preload resistor (R) and a switch (Sw) connected in parallel with said preload resistor (R),

   **characterized in that** the method consists in controlling the inverter stage (INV) so as to control the current (I) flowing in the preload resistor (R) when the motor decelerates, said current (I) being controlled taking into account the voltage ($V_{bus}$) of the DC power supply bus and an optimum reference value ($V_{bus\_ref}$).

2. Control method according to Claim 1, **characterized in that** the optimum reference value is representative of a compromise between the losses experienced in the preload resistor and the amplitude of the oscillations of the voltage of the DC power supply bus.

3. Control method according to Claim 1 or 2, **characterized in that** it comprises a step of determining a limit torque taking into account a difference between the voltage of the DC power supply bus and the optimum reference value, said limit torque being applied to a torque reference in the control law.

4. Variable speed drive comprising:

- a plurality of input phases (U, V, W) able to be connected to an electrical distribution network (1),
- a rectifier stage (REC) connected to the input phases (U, V, W) and designed to rectify a voltage supplied by the electrical distribution network (1),
- a DC power supply bus connected to the rectifier stage (REC), the DC power supply bus comprising a first power supply line (L1) and a second power supply line (L2), defining between them a voltage ($V_{bus}$) of the DC power supply bus,
- a bus capacitor (C) connected to the first power supply line and to the second power supply line and designed to keep the voltage of the DC power supply bus at a constant value,
- an inverter stage (INV) connected downstream of the DC power supply bus and comprising a plurality of switching arms,
- a plurality of output phases (X, Y, Z) designed to connect the inverter stage to an electric motor,
- a control unit for controlling the inverter stage, designed to control the switching arms of the inverter stage in order to deliver a variable voltage to the electric motor,
- a preload device connected in series with the bus capacitor and comprising a preload resistor (R) and a switch (Sw) connected in parallel with said preload resistor,

**characterized in that**:

- the control unit (UC) comprises a deceleration module designed to control the inverter stage so as to control the current flowing in the preload resistor when the motor decelerates, said current being controlled taking into account the voltage of the DC power supply bus and a reference value.

5. Variable speed drive according to Claim 4, **characterized in that** the optimum reference value is representative of a compromise between the losses experienced in the preload resistor and the amplitude of the oscillations of the voltage of the DC power supply bus.

6. Variable speed drive according to Claim 4 or 5, **characterized in that** it comprises a module for determining a limit torque taking into account a difference between the voltage of the DC power supply bus and the optimum reference value.

**Fig. 1**

Fig. 2

*Fig. 3A*

*Fig. 3B*

*Fig. 3C*

**RÉFÉRENCES CITÉES DANS LA DESCRIPTION**

**Documents brevets cités dans la description**

- FR 2982096